# EUROPÄISCHE PATENTSCHRIFT

(11) **EP 0 963 956 B1**
(45) Veröffentlichungstag und Bekanntmachung des Hinweises auf die Patenterteilung: **12.02.2003**
(21) Anmeldenummer: 99107964.1
(22) Anmeldetag: 22.04.1999
(51) Int. Cl.: C03B 9/447

(54) **Ausnehmer-Mechanismus für eine Glasformmaschine**
Extractor for a glass-making machine
Extracteur pour une machine de fabrication de verre

(30) Priorität: 12.06.1998 DE 29810353 U
(43) Veröffentlichungstag der Anmeldung: 15.12.1999
(73) Patentinhaber: FIRMA HERMANN HEYE, 31683 Obernkirchen (DE)
(72) Erfinder: Bögert, Hermann, 31749 Auetal (DE); Schneider, Wilhelm, 31749 Auetal (DE)
(74) Vertreter: Callies, Rainer

(56) Entgegenhaltungen:
- EP-A- 0 866 036

## Beschreibung

Die Erfindung betrifft einen Ausnehmer-Mechanismus zum Transport wenigstens eines Hohlglasgegenstands aus der Fertigformstation einer Glasformmschine auf eine Absetzplatte,mit einem einen Greifermechanismus für den wenigstens einen Hohlglasgegenstand tragenden Transportarm, sowie eine I.S.-Glasformmaschine mit solchen Ausnehmer-Mechanismen.

Bei einem bekannten Ausnehmer-Mechanismus dieser Art (GB 2 232 151 A) wird der in einer Blasformstation befindliche Hohlglasgegenstand mittels eines druckmittelbetätigt vertikal absenkbaren Greifermechanismus erfaßt, der seinerseits wiederum druckmittelbetätigt entlang sich horizontal erstreckender Schienen verfahrbar ist. Eine horizontale Verfahrbarkeit ist gegeben zwischen der Blasformstation und einer Absetzplatte. Der Greifermechanismus ist derart ausgebildet, daB der der Blasformstation entnommene Hohlglasgegenstand während der genannten Führung mittels eines Druckluftmotors um seine Längsachse gedreht wird, um durch den Transport bedingte Verformungen zu unterbinden und um vor dem endgültigen Absetzen auf der Absetzplatte eine Fertigbewegung, wie zum Beispiel ein Flammpolieren, zu ermöglichen. Im Rahmen des Drehantriebs des Greifermechanismus findet ein Schneckengetriebe Anwendung, dessen Schneckenachse zur Achse der Abtriebswelle des genannten Druckluftmotors fluchtend angeordnet ist. Wesensmerkmal der Überführungsbewegung des Hohlglasgegenstands von der Blasformstation zu der Absetzplatte ist hierbei eine aus einem Anheben und einem horizontalen Verschieben zusammengesetzte Bewegung.

Die ältere, aber nachveröffentlichte EP 0 866 036 A1 offenbart einen Ausnehmer-Mechanismus, bei dem ein Schrittmotor mit senkrechter Längsachse eine Schnecke antreibt. Die Schnecke treibt über ein Schneckenrad mit waagerechter Längsachse ein Antriebsgehäuse eines Greifzangenarms. Zwischen dem Schrittmotor und der Schnecke kann ein Untersetzungsgetriebe angeordnet sein. Weder eine elastische Kupplung noch eine Höheneinstellung des Ausnehmer-Mechanismus ist vorgesehen.

Bei einem an sich bekannten Ausnehmer-Mechanismus (WO 98/09921 A1, Fig. 5) treibt der elektrische Antriebsmotor eine im Ölbad laufende Kugelumlaufspindel drehend an. Die Spindel treibt den Schaft einer nach oben ragenden Zahnstange linear hin und her an. Die Zahnstange steht im Eingriff mit dem Zahnrad. Diese Ausführung ist konstruktiv und baulich recht aufwendig.

Der Erfindung liegt die Aufgabe zugrunde, den Antrieb des Ausnehmer-Mechanismus zu vereinfachen und seinen Bewegungsablauf noch präziser zu gestalten.

Diese Aufgabe ist durch die Merkmale des Anspruchs 1 gelöst. Erfindungsgemäß ist die Überführungsbewegung als Drehbewegung eines Transportarmes ausgebildet, welches mit einem einheitlichen Antrieb und in kinematisch im Vergleich zum Stand der Technik einfacherer Weise möglich ist. Die Glasformmaschine kann insbesondere eine Sektion einer I. S. (Individual Section)-Glasformmaschine sein. Bei der Steuerung kann es sich um eine an sich bekannte, frei programmierbare Steuerung handeln, die es gestattet, jedes beliebige Bewegungsprofil für den Ausnehmer-Mechanismus vorzugeben und auch einzuhalten. Für das Schneckengetriebe kann eine günstig hohe Übersetzung gewählt werden, so daß der Elektroservomotor mit ebenso günstiger, höherer Drehzahl betrieben werden kann.

Durch die Merkmale des Anspruchs 2 ergibt sich eine einfache und kompakte Bauweise. Vorzugsweise fluchtet die Längsachse der Schnecke mit der Längsachse des gesamten Elektroservomotors.

Die Merkmale des Anspruchs 3 bringen betriebliche Vorteile und erleichtern die Montage und Demontage des Schneckengetriebes und des Elektroservomotors.

Gemäß Anspruch 4 lassen sich die Ausnehmer-Mechanismen verhältnismäßig leicht in der Höhe auf einen neuen Typ der Hohlglasgegenstände einstellen.

Gemäß Anspruch 5 sind die Ausnehmer-Mechanismen gewissermaßen hängend angeordnet. Dadurch entsteht im unteren Bereich der Formstationen der I.S.-Glasformmaschine in erwünschter Weise freier Raum.

Diese und weitere Merkmale der Erfindung werden nachfolgend anhand des in den Zeichnungen dargestellten Ausführungsbeispiels näher erläutert. Es zeigt:
Fig. 1 eine teilweise geschnittene Seitenansicht einer Sektion einer I.S. -Glasformmaschine mit angebautem Ausnehmer-Mechanismus.
Fig. 2 den Ausnehmer-Mechanismus gemäß Fig. 1 in vergrößerter Darstellung.
Fig. 3 die Rückansicht des Ausnehmer-Mechanismus gemäß Fig. 2, teilweise im Schnitt, und
Fig. 4 die Seitenansicht gemäß Linie IV-IV in Fig. 2, teilweise im Schnitt.

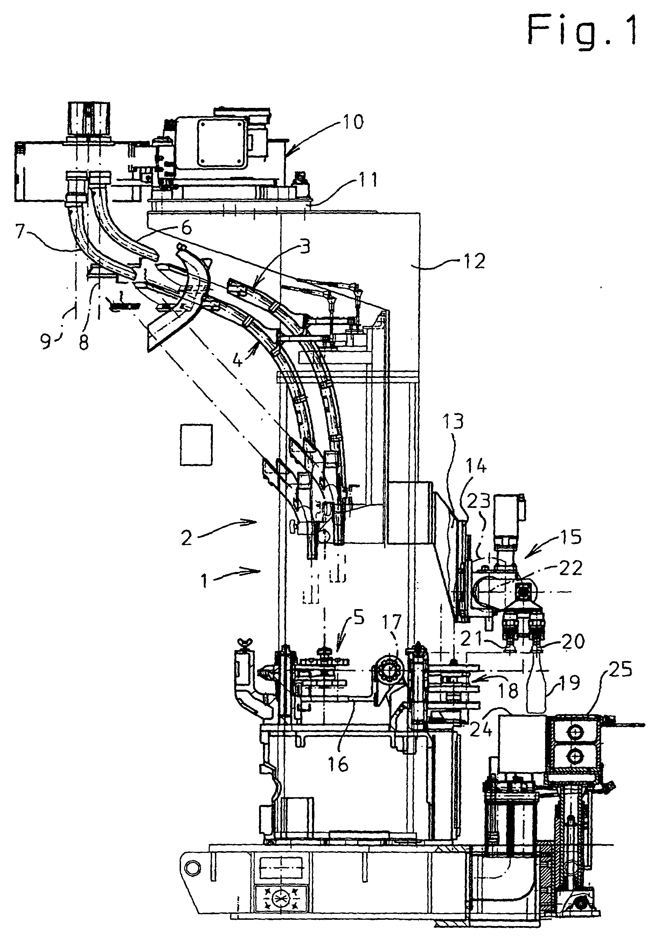

Fig. 1 zeigt eine Sektion 1 einer I.S.-Glasformmaschine 2 in schematischer Darstellung. Die Sektion 1 wird im sogenannten Doppelformbetrieb betrieben. Dies heißt, daß im wesentlichen gleichzeitig zwei nicht dargestellte Tropfen schmelzflüssigen Glases durch zwei Rinnensysteme 3 und 4 Vorformen in einer Vorformstation 5 der Sektion 1 zugeleitet werden.

Scoops 6 und 7 sind jeweils gemeinsam um Hochachsen 8 und 9 schwenkbar und liefern Tropfen nacheinander in die Rinnensysteme 3, 4 der einzelnen Sektionen 1 der I.S.-Glasformmaschine 2. Die Scoops 6, 7 sind Bestandteil eines an sich bekannten Scoop-Mechanismus 10, der an einem Scoopbalken 11 der I.S.-Glasformmaschine 2 montiert ist. An der Unterseite des Scoopbalkens 11 ist eine Winkelkonsole 12 montiert. Die Winkelkonsole 12 ist abwärts hängend ausgebildet und weist einen unteren Fortsatz 13 auf, an dem eine senkrechte Führung 14 ausgebildet ist. Entlang der Führung 14 ist ein Ausnehmer-Mechanismus 15 höheneinstellbar angeordnet.

In der Vorformstation 5 werden, insbesondere durch einen Preßvorgang, Külbel hergestellt und in an sich bekannter Weise durch einen Invertarm 16 um eine waagerechte Achse 17 bis in eine Fertigformstation 18 invertiert. In der Fertigformstation 18 werden in an sich bekannter Weise, insbesondere durch einen Blasvorgang, aus den Külbeln die fertigen Hohlglasgegenstände 19 hergestellt. Jeder Hohlglasgegenstand 19 wird sodann durch einen Greifer 20 und 21 des Ausnehmer-Mechanismus 15 an seiner Mündung ergriffen und um eine waagerechte Achse 22 auf einem Halbkreis 23 aus der Fertigformstation 18 in eine in Fig. 1 dargestellte Abgabeposition transportiert. In dieser Abgabeposition werden die beiden Hohlglasgegenstände 19, von denen in Fig. 1 nur einer gezeichnet ist, durch Öffnen der Greifer 20, 21 an eine darunter angeordnete, an sich bekannte Absetzplatte 24 abgegeben. Anschließend werden die Hohlglasgegenstände 19 mit einem in Fig. 1 nicht gezeichneten Überschieber von der Absetzplatte 24 auf ein allen Sektionen 1 gemeinsames Förderband 25 übergeschoben.

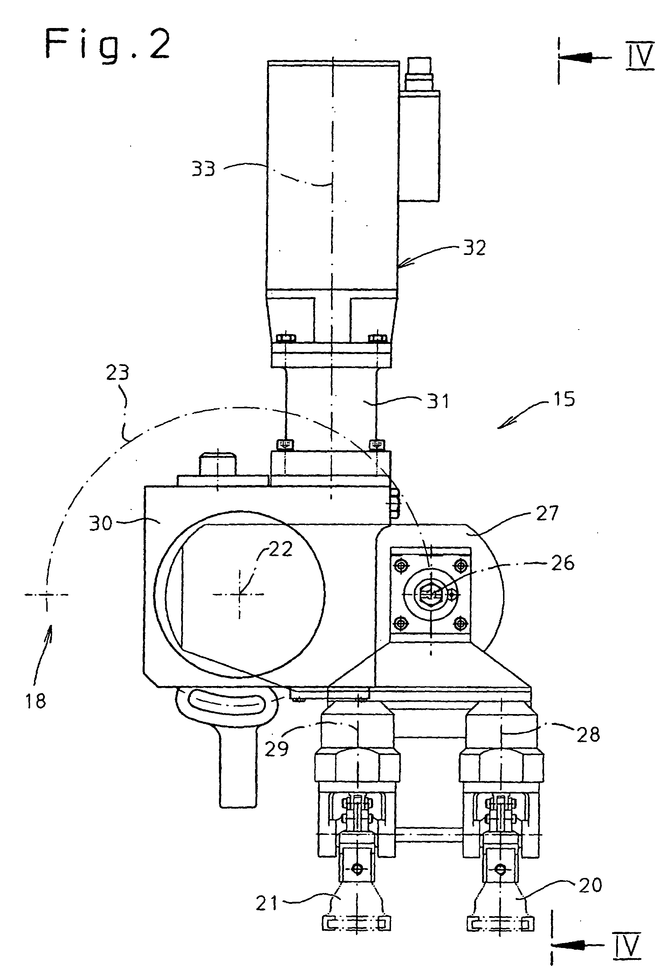

Details des Ausnehmer-Mechanismus 15 sind den Fig. 2 bis 4 zu entnehmen.

In Fig. 2 sind die Greifer 20, 21 in an sich bekannter Weise um eine waagerechte Achse 26 eines Transportarms 27 schwenkbar gelagert. Während der Transportarm 27 um die waagerechte Achse 22 schwenkt, bewegt sich die Achse 26 auf dem Halbkreis 23 gemäß Fig. 1. Dabei ist durch an sich bekannte Mittel sichergestellt, daß Längsachsen 28 und 29 der Greifer 20, 21 stets senkrecht angeordnet bleiben.

Die waagerechte Achse 22 ist Bestandteil eines Getriebegehäuses 30, an das rechts oben in Fig. 2 ein Kupplungsgehäuse 31 angeflanscht ist. An das obere Ende des Kupplungsgehäuses 31 ist schließlich ein Elektroservomotor 32 mit senkrechter Längsachse 33 angeflanscht. Das Getriebegehäuse 30 ist entsprechend Fig. 1 an der senkrechten Führung 14 der Winkelkonsole 12 höheneinstellbar.

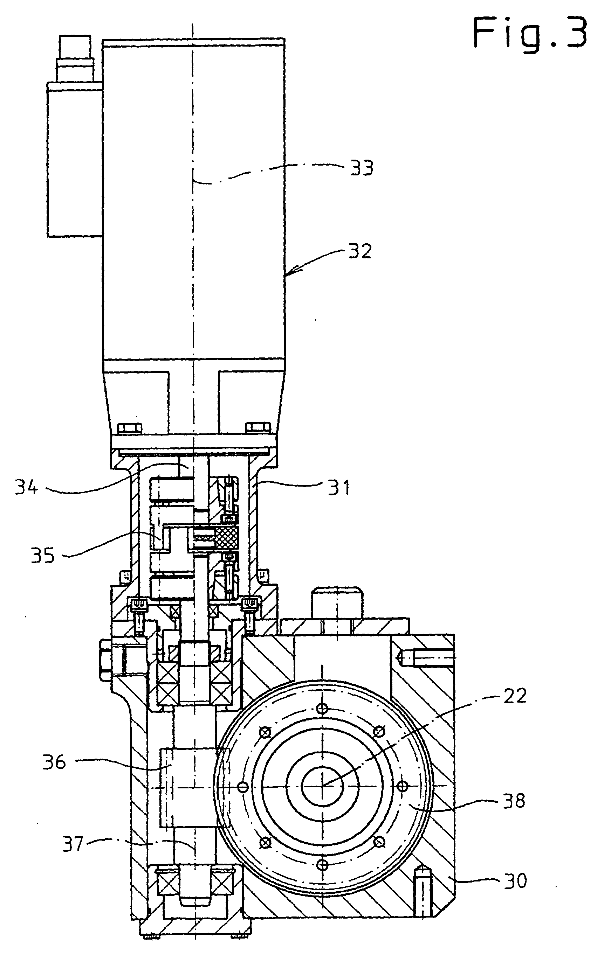

Gemäß Fig. 3 treibt eine Abtriebswelle 34 des Elektroservomotors 32 eine in dem Kupplungsgehäuse 31 untergebrachte elastische Kupplung 35, die ihrerseits eine in dem Getriebegehäuse 30 drehbar gelagerte Schnecke 36 mit senkrechter Längsachse 37 drehend antreibt. Koaxial mit der waagerechten Achse 22 ist in dem Getriebegehäuse 30 ferner ein Schneckenrad 38 drehbar gelagert. Das Schneckenrad 38 kämmt mit der Schnecke 36.

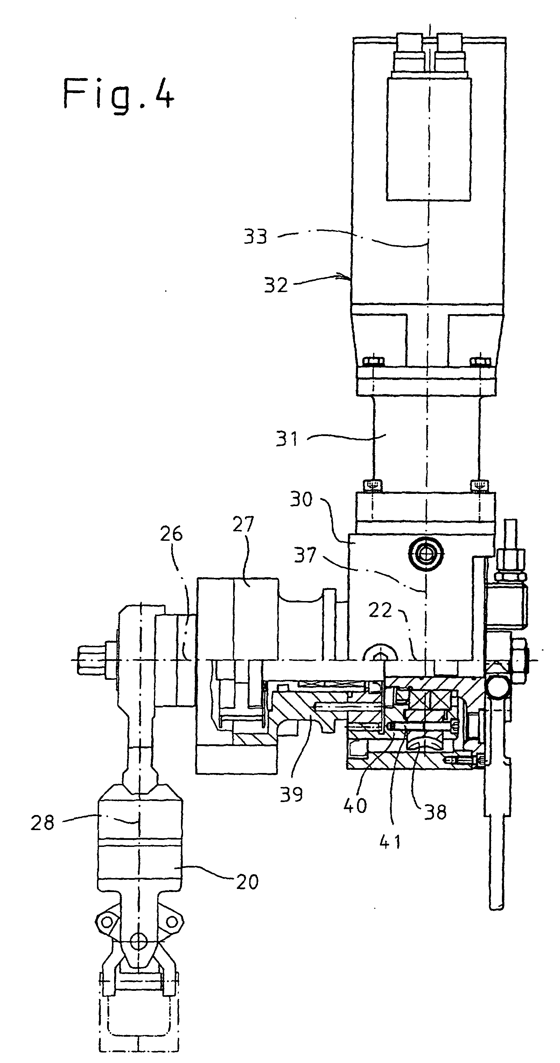

Gemäß Fig. 4 ist ein mit der waagerechten Achse 22 koaxialer Stutzen 39 des Schwenkarms 27 über einen Anschlußkranz 40 mit Schrauben 41 an dem Schneckenrad 38 befestigt. Eine Drehung des Schneckenrades 38 hat deshalb eine gleiche Drehung des Schwenkarms 27 um die waagerechte Achse 22 zur Folge.

## Patentansprüche

1. Ausnehmer-Mechanismus (15) zum Transport wenigstens eines Hohlglasgegenstands (19) aus der Fertigformstation (18) einer Glasformmaschine (2) auf eine Absetzplatte (24),
mit einem einen Greifermechanismus (20,21) für den wenigstens einen Hohlglasgegenstand (19) tragenden Transportarm (27),
wobei der Transportarm (27) zwecks Überführung des Hohlglasgegenstands (19) von der Fertigformstation (18) auf die Absetzplatte (24) durch ein Zahnrad (38), welches mit einem durch eine Steuerung steuerbaren elektrischen Antriebsmotor (32) in Verbindung steht, um eine waagerechte Achse (22) alternierend antreibbar ist,
wobei das Zahnrad ein Schneckenrad (38) ist, welches mit einer in einem Getriebegehäuse (30) drehbar gelagerten Schnecke (36) im Eingriff steht, und
wobei die Schnecke (36) durch den als Elektroservomotor (32) ausgebildeten Antriebsmotor drehend antreibbar ist.

2. Ausnehmer-Mechanismus nach Anspruch 1,
**dadurch gekennzeichnet,**
- **daß** die Längsachse (37) der Schnecke (36) mit der Längsachse (33) einer Abtriebswelle (34) des Elektroservomotors (32) fluchtet.

3. Ausnehmer-Mechanismus nach Anspruch 1 oder 2,
**dadurch gekennzeichnet,**
- **daß** zwischen der Schnecke (36) und einer Abtriebswelle (34) des Elektroservomotors (32) eine elastische Kupplung (35) vorgesehen ist.

4. I. S.-Glasformmaschine (2), wobei in jeder Sektion (1) der Maschine (2) ein Ausnehmer-Mechanismus (15) nach einem der Ansprüche 1 bis 3 höheneinstellbar an einer Führung (14) der Sektion (1) angeordnet ist.

5. I.S.-Glasformmaschine nach Anspruch 4,
**dadurch gekennzeichnet,**
- **daß** die Führung (14) Bestandteil einer an einem Scoopbalken (11) der Glasformmaschine (2) montierten, sich nach unten erstreckenden Winkelkonsole (12) ist.

## Claims

1. Take-out mechanism (15) for transporting at least one hollow glass object (19) from the finishing mould station (18) of a glass forming machine (2) onto a dead plate (24),
having a transport arm (27) carrying a grasping mechanism (20, 21) for the at least one hollow glass object (193,
wherein for the purpose of transferring the hollow glass object (19) from the finishing mould station (18) onto the dead plate (24) the transport arm (27) can be driven in an alternating manner about a horizontal axis (22) by means of a toothed wheel (38) which is connected to an electric driving motor (32) which can be controlled by a control device,
wherein the toothed wheel is a worm wheel (38) which is engaged with a worm (36) rotatably mounted in a transmission housing (30), and
wherein the worm (36) can be rotatably driven by the driving motor formed as an electric servomotor (32).

2. Take-out mechanism as claimed in claim 1,
**characterised in that**
the longitudinal axis (37) of the worm (36) is aligned with the longitudinal axis (33) of a driven shall (34) of the electric servomotor (32).

3. Take-out mechanism as claimed in claim 1 or 2,
**characterised in that**
between the worm (36) and a driven shaft (34) of the electric servomotor (32) an elastic coupling (35) is provided.

4. Individual section glass forming machine (2), wherein in each section (1) of the machine (2) a take-out mechanism (15) as claimed in one of claims 1 to 3 is disposed in a height-adjustable manner on a guide (14) of the section (1).

5. Individual section glass forming machine as claimed in claim 4,
**characterised in that**
the guide (14) is a component of a downwardly-extending angle bracket (12) mounted on a scoop beam (11) of the glass forming machine (2).

## Revendications

1. Mécanisme extracteur (15) destiné à transporter au moins un objet en verre creux (19) depuis la station finisseuse (18) d'une machine à mouler le verre (2) jusqu'à une plaque de pose (24),
comprenant un bras de transport (27) qui porte un mécanisme preneur (20, 21) pour l'au moins un objet en verre creux (19),
dans lequel, pour le transfert de l'objet en verre creux (19) de la station finisseuse (18) à la plaque de pose (24), le bras de transport (27) peut être entraîné dans une façon alternante autour d'un axe horizontal (22) par une roue dentée (38) qui est en liaison avec un moteur d'entraînement électrique (32) pouvant être commandé par une commande,
dans lequel la roue dentée est une roue à vis sans fin (38) qui est en prise avec une vis sans fin (36) montée rotative dans un boîtier d'engrenages (30), et
dans lequel la vis sans fin (36) peut être entraînée en rotation par le moteur d'entraînement constitué par un servomoteur électrique (32).

2. Mécanisme extracteur selon la revendication 1, **caractérisé**
**en ce que** l'axe longitudinal (37) de la vis sans fin (36) est aligné avec l'axe longitudinal (33) d'un arbre de sortie (34) du servomoteur électrique (32).

3. Mécanisme extracteur selon la revendication 1 ou 2, **caractérisé**
**en ce qu'**un accouplement élastique (35) est prévu entre la vis sans fin (36) et un arbre de sortie (34) du servomoteur électrique (32).

4. Machine à mouler le verre I.S. (2), dans laquelle, dans chaque section (1) de la machine (2), est disposé un mécanisme extracteur (15) selon une des revendications 1 à 3, qui est réglable en hauteur le long d'un guide (14) de la section (1).

5. Machine à mouler le verre I.S. selon la revendication 4, **caractérisée**
**en ce que** le guide (14) est une partie constitutive d'une console coudée (12) s'étendant vers le bas, montée sur une barre à cuillère (11) de la machine à mouler le verre (2).
